# EUROPEAN PATENT SPECIFICATION

(11) **EP 3 372 965 B1**
(45) Date of publication and mention of the grant of the patent: **29.11.2023**
(21) Application number: 16862302.3
(22) Date of filing: 12.10.2016
(51) Int. Cl.: G01J 1/22, G01J 1/42, G01J 1/26, B64G 1/66, G03B 7/08

(54) **FILTERING DEVICE AND METHOD FOR PROTECTING PHOTOSENSOR**
FILTERVORRICHTUNG UND VERFAHREN ZUM SCHUTZ EINES FOTOSENSORS
DISPOSITIF FILTRANT ET PROCÉDÉ DE PROTECTION DE PHOTOCAPTEUR

(30) Priority: 05.11.2015 KR 20150155062
(43) Date of publication of application: 12.09.2018
(73) Proprietor: Korea Aerospace Research Institute, Daejeon 34133 (KR)
(72) Inventor: KIM, Chang Kyoon, Daejeon 34190 (KR); CHOI, Su Jin, Daejeon 34074 (KR); SUK, Byong Suk, Daejeon 34083 (KR)
(74) Representative: V.O.
(86) International application number: PCT/KR2016/011390
(87) International publication number: WO 2017/078284

(56) References cited:
- DE-A1- 10 302 717
- JP-A- H10 185 683
- JP-A- H11 180 400
- JP-A- 2001 099 706
- JP-A- 2001 099 706
- JP-A- 2010 019 938
- JP-A- 2013 024 897
- US-A- 3 538 335
- US-B1- 8 907 261

## Description

### Technical Field

The present invention relates to a filtering method and device for protecting an optical sensor and, more particularly, to a filtering method and device for preventing damage to an optical sensor from a strong sunlight.

### Background Art

In order to accomplish a task, a satellite, for example, a spacecraft uses, uses various optical sensors such as an image acquiring device that captures an image of a space environment, a star tracker that detects a direction in which starlight is incident based on a position of a star, and a sun sensor that detects a presence of the sun. The optical sensor may sense an incident light and convert the light into an electric signal and thus, may be susceptible for an intensity of light. Also, when a light exceeding an appropriate amount is input, the optical sensor may be deteriorated in performance or damaged to be unusable.

In a related art, a method of implementing a satellite to avoid a strong sunlight by calculating a time in which a sunlight exceeding a threshold is incident using an ephemeris, an orbit, and a posture of the satellite and transmitting a command signal for changing the orbit and the posture of the satellite based on the calculated time may be used. In this method, additional fuel consumption may be required for evasive maneuvering, which may affect a life of the satellite. Also, such method may be inefficient in that additional costs are required for the evasive maneuvering.

Further methods of protecting an optical sensor of a satellite are disclosed in US3538335A and JP2001099706A.

### Disclosure of Invention

### Technical solutions

According to an aspect, there is provided a method for protecting an optical sensor of a satellite according to claim 1. Further preferred embodiments are disclosed in the dependent claims.

According to still another aspect, there is also provided a non-transitory computer-readable storage medium storing a program according to claim 9.

### Brief Description of Drawings

FIGS. 1A and 1B are diagrams illustrating examples of an operation of a satellite for preventing damage to an optical sensor according to an example embodiment.
FIG. 2 is a flowchart illustrating a process of data transmission and reception performed between a satellite and an earth station according to an example embodiment.
FIG. 3 is a diagram illustrating an evasive maneuvering process of a satellite according to an example embodiment.
FIG. 4 is a block diagram illustrating a satellite according to an example embodiment.
FIG. 5 is a flowchart illustrating a method of controlling a filter of a satellite according to an example embodiment.

### Best Mode for Carrying Out the Invention

Hereinafter, example embodiments will be described in detail with reference to the accompanying drawings. It should be understood, however, that there is no intent to limit this disclosure to the particular example embodiments disclosed. On the contrary, example embodiments are to cover all modifications, equivalents, and alternatives falling within the scope of the example embodiments.

Although terms such as "first," "second," and "third" may be used herein to describe various members, components, regions, layers, or sections, these members, components, regions, layers, or sections are not to be limited by these terms. Thus, a first member, component, region, layer, or section referred to in examples described herein may also be referred to as a second member, component, region, layer, or section without departing from the teachings of the examples.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween.

The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

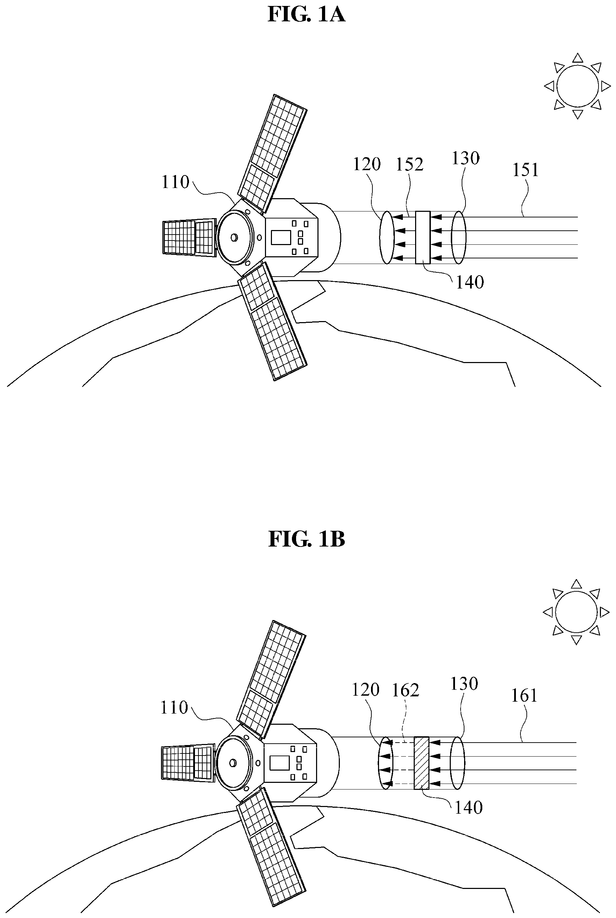

FIGS. 1A and 1B are diagrams illustrating examples of an operation of a satellite for preventing damage to an optical sensor according to an example embodiment. FIG. 1A illustrates a satellite 110 that travels and circulates around a planet. In this disclosure, a planet may be a celestial body that revolves around a star and does not light itself. The planet may include, for example, the earth, the mercury, the venus, and the mars. The embodiment described with reference to FIG. 1A is merely an example of the present disclosure and thus, it is obvious to those skilled in the art that the satellite 110 is able to explore comets, asteroids, and satellites that are driven by manpower around the planet. The satellite may be, for example, the moon that circulates around the earth.

The satellite 110 includes an optical sensor 120 configured to for example measure a posture and an orbit of the satellite 110. For example, the optical sensor 120 may include a lens that senses a light transmitted through the satellite 110. In addition, as a path through which the light is promoted, the satellite 110 may include a tube 130 connecting the lens of the optical sensor 120 and a main body of the satellite 110. For example, the satellite 110 may measure at least one of an angle, a direction, and an intensity of an incident light passing through the tube 130 and acquire a posture, a position, and an orbit of the satellite 110 based on measured data.

The satellite 110 may include a filter 140 in the tube 130. The optical sensor 120 may receive a light 152 filtered by the filter 140 instead of directly receiving a light 151 such as a starlight or a sunlight. In an example, the filter 140 may be a smart window that changes a transmittance of a light based on a magnitude of an input voltage. In another example, the filter 140 may be a polarized light filter that changes a polarization ratio based on an input signal.

FIG. 1B illustrates an operation of the filter 140. For example, it is assumed that a solar cycle is a solar max in which a number of sunspots observed on an outer surface of the sun increases and a solar radiation increases. In this example, a sunlight exceeding an appropriate amount may be input to the satellite 110. When the sunlight exceeding the appropriate amount is transmitted through the satellite 110, the optical sensor 120 may be malfunctioning or destroyed.

The satellite 110 may receive a control signal from a control center or an earth station. In addition, the satellite 110 may increase an input voltage input to the filter 140 based on the received control signal. According to an increase in the input voltage, a transparency of the filter 140 may decrease and a transmittance of the light passing through the filter 140 may decrease. In this example, even when an intensity of a light 161 input from an external source to the filter 140 is greater than or equal to a threshold, an intensity of a filtered light 162 may be reduced to be less than a threshold based on the transmittance of the filter 140. The optical sensor 120 may receive the filtered light 162 having the intensity less than or equal to the threshold and may be protected from a strong light. Thus, an effect that a use time of the satellite 110 increases may be expected.

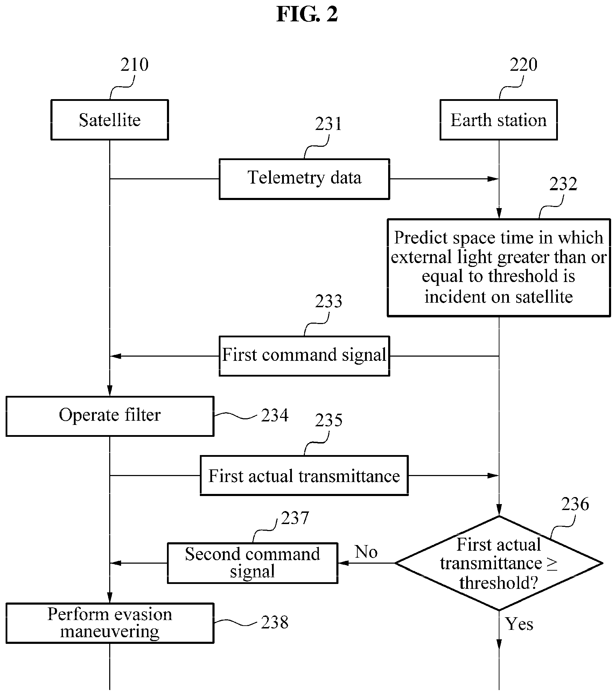

FIG. 2 is a flowchart illustrating a process of data transmission and reception performed between a satellite and an earth station according to an example embodiment. FIG. 2 illustrates a process of data transmission and reception performed between a satellite 210 that travels in the space and an earth station 220 that transmits a task and controls an operation of the satellite 210 on the earth. The earth station 220 of FIG. 2 is merely an example and thus, is not taken as being limited thereto. It is obvious to those skilled in the art that the description of the earth station 220 is also applicable to a device for controlling an operation of the satellite 210 in the space when the device is present in an orbiter, a landing module, or a space center.

The satellite 210 acquires measurement data in various forms while travelling in the space. The satellite 210 transmits the measurement data to the earth station 220 as telemetry data 231. In an example, the measurement data may be angular velocity data and acceleration data of the satellite 210 measured using an inertial measurement unit (IMU) sensor. The IMU sensor may include a gyro sensor and an acceleration sensor. In another example, the measurement data may be star tracking data indicating a direction of a starlight input to the satellite 210. Also, the satellite 210 may transmit overall operation data output or measured in a task process to the earth station 220 as telemetry data.

In operation 232, the earth station 220 predicts a space time in which an external light greater than or equal to a threshold is incident on the satellite 210 based on the received telemetry data 231. The external light may be, for example, the sunlight. The earth station 220 may calculate a speed, a posture, and a position of the satellite 210 for a predetermined period of time based on the angular velocity data and the acceleration data of the satellite 210 included in the received telemetry data 231. The calculating may be performed by, for example, a flight dynamics subsystem (FDS) of a computing device included in the earth station 220. The earth station 220 predicts an intensity of the external light incident on the satellite over time based on the received telemetry data 231 and celestial data. The celestial data may be data calculated by the earth station 220. The celestial data may be used to calculate orbits of the sun, a planet, a satellite, and a comet based on prestored positions thereof, and may indicate positional data of the sun, the planet, the satellite, and the comet at a predetermined point in time.

When the space time in which the external light greater than or equal to the threshold is incident on the satellite 210 is predicted, the earth station 220 transmits a first command signal 233 to the satellite 210. In an example, the first command signal 233 may be data obtained by matching a control signal for increasing a voltage input to a filter of the satellite 210 and a space time in which the control signal is input.

According to the invention, the first command signal includes the space time and a set transmittance for controlling the intensity of the light.

In another example, the first command signal 233 may be a signal for controlling a polarization direction of a polarized light filter included in the filter of the satellite 210.

In operation 234, the satellite 210 operates the filter in response to the first command signal 233 being received. The satellite 210 may input a voltage greater than or equal to a threshold to the filter during the space time corresponding to the first command signal 233. Through this, a transparency of the satellite 210 decreases such that a strong external light input to an optical sensor of the satellite 210 is filtered.

The satellite 210 may transmit a first actual transmittance 235 corresponding to operation 234 to the earth station 220. For example, there is a possibility that a case in which a sufficient voltage greater than or equal to the threshold is not input due to an abnormality in a processor of the satellite 210 or a case in which the optical sensor is not protected due to a mechanical defect of the filter occurs. In such cases, the earth station 220 may receive the first actual transmittance 234 as a feedback signal corresponding to the first command signal 233 and determine whether the filter of the satellite 210 operates normally.

The earth station 220 compares the received first actual transmittance 234 to a threshold in operation 236. The threshold may be a first set transmittance corresponding to an operation of the filter. For example, it is assumed that the earth station 220 transmits the first command signal 233 such that 30% of light input to the optical sensor is to be transmitted. When the first actual transmittance 234 of the light transmitted from the satellite 210 is 60%, the first actual transmittance 234 may exceed a threshold. In this example, the earth station 220 may determine that the filter of the satellite 210 operates in an abnormal state.

Based on a result of the determining, the earth station 220 may transmit a second command signal 237 to the satellite 210. When the first actual transmittance 234 is greater than the threshold, the earth station 220 may transmit the second command signal 237 to the satellite 210. The satellite 210 may perform evasive maneuvering based on the second command signal 237 in operation 238. A process of evasive maneuvering performed by the satellite 210 based on the second command signal 237 in operation 238 will be described in detail below.

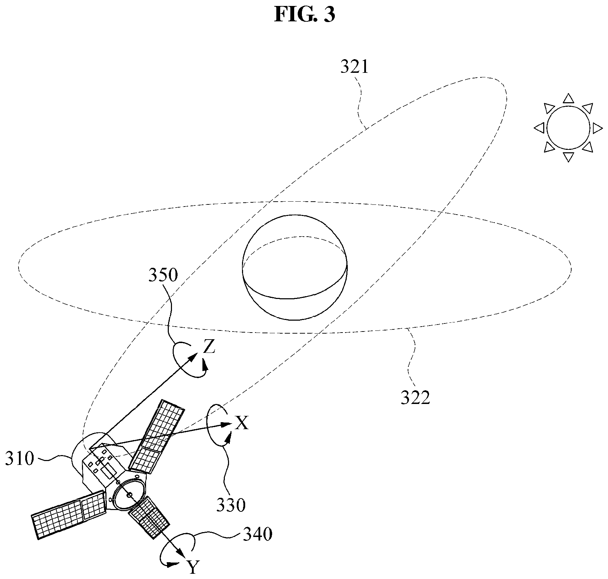

FIG. 3 is a diagram illustrating an evasive maneuvering process of a satellite according to an example embodiment. FIG. 3 illustrates a satellite 310 that circulates in a first orbit 321 surrounding a planet. An earth station may transmit a second command signal for changing an orbit to the satellite 310 based on an actual transmittance received from the satellite 310. The actual transmittance may be a transmittance of an external light that is transmitted through an optical sensor in response to an operation of the satellite 310.

The earth station may compare the actual transmittance received from the satellite 310 and a set transmittance to determine whether a protection of the optical sensor is sufficiently performed by a filter of the satellite 310. When an intensity of light incident on the satellite 310 is not reduced based on an optical method using the filter of the satellite 310, the earth station may instruct the satellite 310 to perform evasive maneuvering to avoid a high intensity of the external light.

For example, a computing device of the earth station may transmit data obtained by matching an absolute space time, a reaction wheel driving direction, and a thruster injecting direction for changing an orbit to the satellite 310 as the second command signal. The second command signal may be data indicating an operation of the satellite 310 on a time-by-time basis such as "injecting a thruster for 11 seconds at a space time T₁". The second command signal may be transmitted to the satellite 310 in a form of a telecommand between the earth station and the satellite. The satellite 310 may circulate around the planet using a second orbit 322 in which the satellite 310 receives an external light having an intensity less than before.

In an example, the earth station may change a movement posture that the satellite 310 maintains in the first orbit 321. The movement posture of the satellite 310 may be defined as a roll angle, a pitch angle, and a yaw angle. FIG. 3 illustrates a first rotation direction 330, a second rotation direction 340, and a third rotation direction 350 of the satellite 310. The first rotation direction 330 may be a direction in which a rotation is performed about a promotion direction (x axis) of the satellite 310 and correspond to the roll angle. The second rotation direction 340 may be a direction (y axis) vertical to an orbit plane and vertical to the promotion direction (x axis) of the satellite 310, and correspond to the pitch angle. The third rotation direction 150 may be a direction (z axis) facing a planet and vertical to the promotion direction (x axis) of the satellite 310, and correspond to the yaw angle.

The earth station may transmit the second command signal associated with a posture change of the satellite 310 to the satellite 310. The second command signal may be, for example, data obtained by matching the absolute space time and angle information used for the posture change of the satellite 310. For example, the second command signal may be data indicating the posture change of the satellite 310 on the time-by-time basis such as "rotating at 20 degrees in a yaw-angle direction at a space time T₂".

Although the orbit or the posture of the satellite 310 is changed in the present example, embodiments are not limited thereto. It is obvious to those skilled in the art that the second command signal for changing the orbit and the posture of the satellite 310 simultaneously is to be transmitted.

To prevent a projection, to the satellite 310, of an external light having an intensity greater than or equal to a threshold, a filter that controls a transmittance or a configuration of controlling evasive maneuvering of the satellite 310 may be provided selectively. To protect the optical sensor, the earth station may use one of the filter and the configuration depending on a situation, thereby protecting the satellite 310 from a strong external light directly incident on the satellite 310. Even when an abnormality occurs in one of control paths, a user of the earth station may protect the satellite 310 from the strong external light using another method selectively, which may ensure a protection of the satellite 310 with high efficiency and reliability.

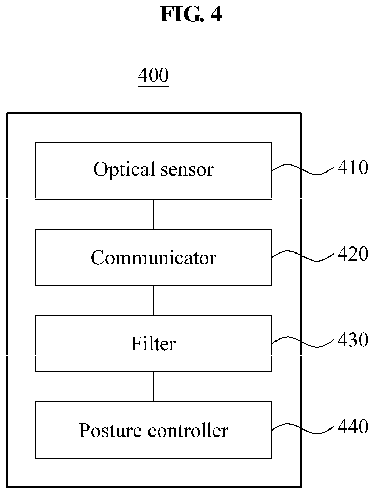

FIG. 4 is a block diagram illustrating a satellite according to an example embodiment. Referring to FIG. 4, a satellite 400 may include an optical sensor 410, a communicator 420, a filter 430, and a posture controller 440. The optical sensor 410 may acquire data associated with the satellite 400 using a light transmitted through the satellite 400.

In an example, the optical sensor 410 may be a sun sensor that senses a sunlight. The optical sensor 410 may acquire an azimuth and an altitude angle of the sun using an angle and a direction in which the sunlight is incident as data associated with the satellite 400.

In another example, the optical sensor 410 may be a charge coupled device (CCD) camera. In this example, the optical sensor 410 may acquire a star pattern observed in the space as data associated with the satellite 400. The satellite 400 may compare the acquired star pattern to a prestored star catalog and determine a position and a posture of the satellite 400.

The communicator 420 may receive a first command signal for controlling an intensity of light from a control center of the satellite 400. The communicator 420 may receive a space time in which an intensity of light input to the satellite 400 is greater than or equal to a threshold and a set transmittance for controlling the intensity of light as the first command signal. For example, the communicator 420 may receive the first command signal in association with a command "maintaining the set transmittance less than 30% during a period of time from a first space time T₁ to the second space time T₂". The control center may be a place including a device for controlling an operation of the satellite 400. The control center may include, for example, an earth station, an orbiter in the space, or a space center.

The filter 430 may control a light transmittance based on the received first command signal. In response to an operation of the filter 430, the satellite 400 may prevent the optical sensor 410 from receiving a light exceeding a predetermined intensity. Accordingly, an effect that damages to the optical sensor 410 are prevented and an expected life is ensured may be provided.

The filter 430 may be maintained in a default state before receiving the first command signal. The default state may be, for example, a state in which the filter 430 is transparent. The filter 430 may be maintained in the default state as a transparent state with a high transmittance so as to ensure an environment in which the satellite 400 operates without abnormality even when a command signal is not normally transmitted to the filter 430 due to a failure or an error of other elements included in the satellite 400. Even when the filter 430 is unavailable, the satellite 400 may perform the evasive maneuvering to avoid an input of an external light exceeding a threshold.

The transparency of the filter 430 may decrease during the space time corresponding to the first command signal based on the set transmittance. The filter 430 may filter the light to be transmitted through the optical sensor 410 and transmit a portion of the light to the optical sensor 410.

In an example, the filter 430 may calculate an actual transmittance of a light controlled based on the first command signal. The communicator 420 may transmit the actual transmittance to the control center. The communicator 420 may receive a second command signal from the control center. The second command signal may be a signal determined based on the actual transmittance. The posture controller 440 may perform the evasive maneuvering to change a posture of the satellite 400 or an orbit of the satellite 400 based on the second command signal. Since the description of FIG. 3 is also applicable here, repeated description of an operation of the posture controller 440 will be omitted for brevity.

In the present example, the filter 430 operates in response to the first command signal and the posture controller 440 operates in response to the second command signal. However, the description should not be construed as limiting the scope of the present disclosure. It is obvious to those skilled in the art that the present disclosure is applicable to a configuration including the posture controller 440 operating in response to the first command signal and the filter 430 operating in response to the second command signal.

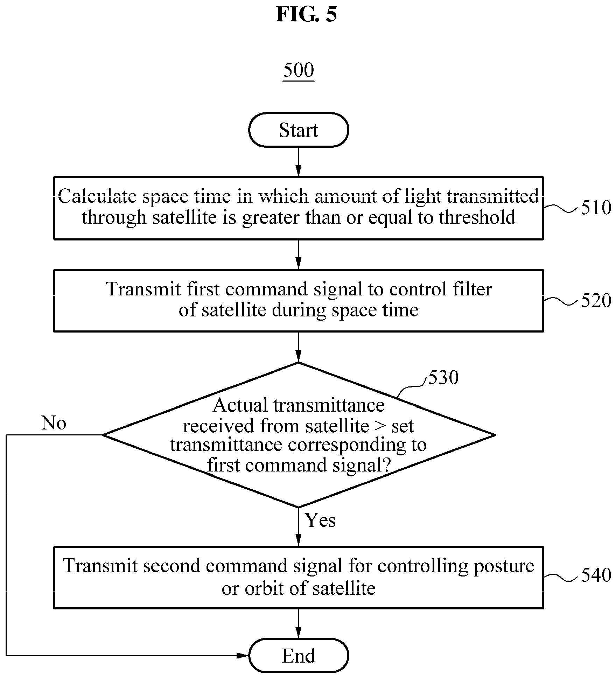

FIG. 5 is a flowchart illustrating a method of controlling a filter of a satellite according to an example embodiment. A method 500 of controlling a filter of a satellite may include operation 510 of calculating a space time in which an amount of light transmitted through a satellite is greater than or equal to a threshold, operation 520 of transmitting a first command signal to control a filter of the satellite during the space time, operation 530 of comparing an actual transmittance received from the satellite and a set transmittance corresponding to the first command signal, and operation 540 of transmitting a second command signal for controlling a posture or an orbit of the satellite.

In operation 510, a satellite control apparatus may calculate a space time in which an amount of light transmitted through a satellite is greater than or equal to a threshold based on telemetry received from the satellite. For example, the telemetry may be at least one of a posture, a position, a speed, and an orbit of the satellite. Also, in operation 510, the satellite control apparatus may calculate celestial data indicating positional data corresponding to a predetermine point in time for each of the sun, a planet, a satellite, and a comet based on prestored positional data. Operation 510 may be performed by a computing device of an earth station. Operation 510 may be performed by, for example, an FDS module in the computing device of the earth station.

In operation 520, the satellite control apparatus may transmit a first command signal to the satellite to control a filter of the satellite during the space time. The first command signal may be, for example, a control signal for increasing a voltage input to the filter during a preset space time. A transparency of the filter may decrease in response to the control signal. Also, in operation 520, the satellite control apparatus may transmit the first command signal to the satellite as a telecommand.

In operation 530, the satellite control apparatus may compare the actual transmittance received from the satellite and a set transmittance corresponding to the first command signal. Also, in operation 530, the satellite control apparatus may determine whether the actual transmittance received from the satellite is greater than or equal to the set transmittance corresponding to the first command signal. When the actual transmittance is determined to be less than or equal to the set transmittance in operation 530, the satellite control apparatus may terminate the method 500 of controlling the filter of the satellite. When the actual transmittance is determined to be greater than the set transmittance in operation 530, operation 540 may be performed.

In operation 540, the satellite control apparatus may transmit a second command signal for controlling a posture or an orbit of the satellite. The satellite control apparatus may determine that a predetermined amount of external light is not blocked through a transmittance control performed using the filter. Thus, in operation 540, the satellite control apparatus may transmit the second command signal corresponding to the evasive maneuvering of the satellite to the satellite.

The units and/or modules described herein may be implemented using hardware components and software components. For example, the hardware components may include microphones, amplifiers, band-pass filters, audio to digital convertors, and processing devices. A processing device may be implemented using one or more hardware device configured to carry out and/or execute program code by performing arithmetical, logical, and input/output operations. The processing device(s) may include a processor, a controller and an arithmetic logic unit, a digital signal processor, a microcomputer, a field programmable array, a programmable logic unit, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

The software may include a computer program, a piece of code, an instruction, or some combination thereof, to independently or collectively instruct and/or configure the processing device to operate as desired, thereby transforming the processing device into a special purpose processor. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher level code that may be executed by the computer using an interpreter. The above-described devices may be configured to act as one or more software modules in order to perform the operations of the above-described example embodiments, or vice versa.

## Claims

1. A method for protecting an optical sensor of a satellite (110, 210, 310, 400), the method comprising:
transmitting telemetry data from the satellite to a control center of the satellite; the telemetry data comprising a posture of the satellite and a speed of the satellite
having a calculator of the control center predict an intensity of external light incident on the satellite over time based on the posture of the satellite, speed of the satellite and celestial data;
when a space time, in which the intensity of external light incident on the satellite is higher than or equal to a threshold, is predicted, transmitting a first command signal (233) from the control center to the satellite, wherein the first command signal (233) includes the space time and a set transmittance for controlling the intensity of the light;
operating a filter of the satellite in response to the first command signal (233) such that the light to an optical sensor of the satellite is filtered by decreasing a transparency of the filter based on the set transmittance during the space time.

2. The method of claim 1, wherein operating the filter of the satellite includes increasing the transparency of the filter (140) to correspond to a default state when the space time elapses.

3. The method of claim 1, further comprising calculating an actual transmittance (235) of light in response to the first command signal (233) based on an operation of the filter, and transmitting the actual transmittance to the control center (220).

4. The method of claim 3, further comprising receiving a second command signal (233) from the control center (220) of the satellite, the second command signal being determined based on the actual transmittance, wherein the satellite changes its posture and orbit in response to the second command signal.

5. The method of claim 1, wherein decreasing the transparency of the filter includes increasing a voltage input to the filter.

6. The method of claim 4, further comprising receiving the actual transmittance from the satellite , and calculating a difference value between the actual transmittance and a set transmittance corresponding to the first command signal.

7. The method of claim 6, further comprising when the difference value between the actual transmittance and the set transmittance is greater than or equal to a difference threshold, transmitting the second command signal to the satellite for controlling the posture and the orbit of the satellite.

8. A non-transitory computer-readable storage medium storing a program configured to execute the method according to any of the preceding claims 1-7, wherein the program comprises:
a set of instructions executed to calculate a space time in which an amount of light transmitted through the satellite is greater than or equal to a threshold based on a posture of the satellite, a speed of the satellite, and celestial data; and
a set of instructions executed to transmit, to the satellite, a first command signal for reducing the amount of light by controlling a filter of the satellite during the space time,
wherein the filter is configured to filter light that is input to the optical sensor and transfer the filtered light to the optical sensor.

## Patentansprüche

1. Verfahren zum Schutz eines optischen Sensors eines Satelliten (110, 210, 310, 400), das Verfahren umfassend:
Übertragen von Telemetriedaten von dem Satelliten an ein Kontrollzentrum des Satelliten; wobei die Telemetriedaten eine Position des Satelliten und eine Geschwindigkeit des Satelliten umfassen;
Vorhersagen der Intensität des auf den Satelliten einfallenden externen Lichts durch einen Rechner des Kontrollzentrums im Laufe der Zeit, basierend auf der Position des Satelliten, der Geschwindigkeit des Satelliten und den Himmelsdaten;
wenn eine Raumzeit, in der die Intensität des auf den Satelliten einfallenden externen Lichts größer oder gleich einem Schwellenwert ist, vorhergesagt wird, Übertragen eines ersten Befehlssignals (233) von dem Kontrollzentrum an den Satelliten, wobei das erste Befehlssignal (233) die Raumzeit und eine Soll-Durchlässigkeit zum Steuern der Lichtintensität einschließt;
Betreiben eines Filters des Satelliten in Reaktion auf das erste Befehlssignal (233), wodurch das Licht zu einem optischen Sensor des Satelliten gefiltert wird, indem eine Transparenz des Filters basierend auf der Soll-Durchlässigkeit während der Raumzeit verringert wird.

2. Verfahren nach Anspruch 1, wobei das Betreiben des Filters des Satelliten das Erhöhen der Transparenz des Filters (140) einschließt, um bei Ablauf der Raumzeit einem Standardzustand zu entsprechen.

3. Verfahren nach Anspruch 1, ferner umfassend das Berechnen einer tatsächlichen Durchlässigkeit (235) von Licht in Reaktion auf das erste Befehlssignal (233) basierend auf einem Betrieb des Filters, und das Übertragen der tatsächlichen Durchlässigkeit an das Kontrollzentrum (220).

4. Verfahren nach Anspruch 3, ferner umfassend das Empfangen eines zweiten Befehlssignals (233) von dem Kontrollzentrum (220) des Satelliten, wobei das zweite Befehlssignal basierend auf der tatsächlichen Durchlässigkeit bestimmt wird, wobei der Satellit seine Position und seine Umlaufbahn in Reaktion auf das zweite Befehlssignal ändert.

5. Verfahren nach Anspruch 1, wobei das Verringern der Transparenz des Filters das Erhöhen einer Eingangsspannung in den Filter einschließt.

6. Verfahren nach Anspruch 4, ferner umfassend das Empfangen der tatsächlichen Durchlässigkeit von dem Satelliten und das Berechnen eines Differenzwertes zwischen der tatsächlichen Durchlässigkeit und einer Soll-Durchlässigkeit, die dem ersten Befehlssignal entspricht.

7. Verfahren nach Anspruch 6, ferner umfassend, wenn der Differenzwert zwischen der tatsächlichen Durchlässigkeit und der Soll-Durchlässigkeit größer oder gleich einem Differenzschwellenwert ist, das Übertragen des zweiten Befehlssignals an den Satelliten zum Steuern der Position und der Umlaufbahn des Satelliten.

8. Nicht flüchtiges computerlesbares Speichermedium, das ein Programm speichert, das zum Ausführen des Verfahrens nach einem der vorhergehenden Ansprüche 1 bis 7 konfiguriert ist, wobei das Programm umfasst:
einen Satz von Befehlen, die zum Berechnen einer Raumzeit, in der eine durch den Satelliten übertragene Lichtmenge größer oder gleich einem Schwellenwert ist, ausgeführt werden, basierend auf einer Position des Satelliten, einer Geschwindigkeit des Satelliten und Himmelsdaten; und
einen Satz von Befehlen, die ausgeführt werden, um an den Satelliten ein erstes Befehlssignal zum Verringern der Lichtmenge durch Steuern eines Filters des Satelliten während der Raumzeit zu übertragen,
wobei der Filter konfiguriert ist, um das in den optischen Sensor eingegebene Licht zu filtern und das gefilterte Licht an den optischen Sensor zu übertragen.

## Revendications

1. Procédé pour protéger un capteur optique d'un satellite (110, 210, 310, 400), le procédé comprenant les étapes suivantes :
transmettre des données de télémesure du satellite à un centre de commande du satellite, les données de télémesure comprenant une posture du satellite et une vitesse du satellite ;
faire prédire par un calculateur du centre de commande une intensité de la lumière extérieure incidente sur le satellite dans le temps en fonction de la posture du satellite, de la vitesse du satellite et de données astronomiques ;
quand un temps spatial, dans lequel l'intensité de la lumière extérieure incidente sur le satellite est supérieure ou égale à un seuil, est prédit, transmettre un premier signal de commande (233) du centre de commande au satellite, le premier signal de commande (233) comportant le temps spatial et un facteur de transmission réglé pour commander l'intensité de la lumière ;
activer un filtre du satellite en réponse au premier signal de commande (233) de sorte que la lumière arrivant sur un capteur optique du satellite est filtrée en réduisant une transparence du filtre en se basant sur le facteur de transmission réglé pendant le temps spatial.

2. Procédé selon la revendication 1, dans lequel l'activation du filtre du satellite comprend le fait d'augmenter la transparence du filtre (140) pour correspondre à un état par défaut quand le temps spatial s'écoule.

3. Procédé selon la revendication 1, comprenant en outre le fait de calculer un facteur de transmission courant (235) de la lumière en réponse au premier signal de commande (233) basé sur un fonctionnement du filtre, et de transmettre le facteur de transmission courant au centre de commande (220).

4. Procédé selon la revendication 3, comprenant en outre le fait de recevoir un deuxième signal de commande (233) du centre de commande (220) du satellite, le deuxième signal de commande étant déterminé d'après le facteur de transmission courant, dans lequel le satellite modifie sa posture et son orbite en réponse au deuxième signal de commande.

5. Procédé selon la revendication 1, dans lequel la réduction de la transparence du filtre comprend le fait d'augmenter une tension électrique appliquée en entrée du filtre.

6. Procédé selon la revendication 4, comprenant en outre le fait de recevoir le facteur de transmission courant du satellite, et de calculer une valeur de différence entre le facteur de transmission courant et un facteur de transmission réglé correspondant au premier signal de commande.

7. Procédé selon la revendication 6, comprenant en outre, lorsque la valeur de différence entre le facteur de transmission courant et le facteur de transmission réglé est supérieure ou égale à un seuil de différence, transmettre le deuxième signal de commande au satellite pour commander la posture et l'orbite du satellite.

8. Support de stockage non transitoire lisible par ordinateur, stockant un programme configuré pour exécuter le procédé de l'une quelconque des précédentes revendications 1 à 7, dans lequel le programme comprend :
un ensemble d'instructions exécuté pour calculer un temps spatial dans lequel une quantité de lumière transmise à travers le satellite est supérieure ou égale à un seuil en fonction d'une posture du satellite, d'une vitesse du satellite et de données astronomiques ; et
un ensemble d'instructions exécuté pour transmettre au satellite un premier signal de commande pour réduire la quantité de lumière en commandant un filtre du satellite pendant le temps spatial,
dans lequel le filtre est configuré pour filtrer la lumière qui arrive sur le capteur optique et pour transférer la lumière filtrée au capteur optique.
